# EUROPÄISCHE PATENTANMELDUNG

(11) **EP 3 865 238 A1**
(43) Veröffentlichungstag der Anmeldung: **18.08.2021**
(21) Anmeldenummer: 20156538.9
(22) Anmeldetag: 11.02.2020
(51) Int. Cl.: B23D 59/00, B08B 15/04, B28D 7/02, B28D 1/04, B23Q 11/00, B23Q 11/08

(54) **VORRICHTUNG UND SYSTEM ZUM ABDECKEN EINES MIT EINEM WERKZEUGGERÄT ERZEUGBAREN SCHNITTSPALTS, SOWIE VERFAHREN ZUM ABSAUGEN VON STAUB AUS EINEM ARBEITSBEREICH EINES WERKZEUGGERÄTS**

(71) Anmelder: Hilti Aktiengesellschaft, 9494 Schaan (LI)
(72) Erfinder: Rieger, Hans-Joerg, 6712 Thueringen (AT); Zogg, Urs, 9472 Grabs (CH); Zoller, Ansgar, 6811 Göfis (AT)
(74) Vertreter: Hilti Aktiengesellschaft Corporate Intellectual Property

(57) **Zusammenfassung**

Die vorliegende Erfindung betrifft eine Vorrichtung zum Abdecken eines mit einem Werkzeuggerät erzeugbaren Schnittspalts. Dabei kann die Vorrichtung mit einer Staubabsaugvorrichtung verbunden werden, so dass der Staub, der bei der Arbeit mit dem Werkzeuggerät entsteht, mit Hilfe des Staubabsauggeräts aus dem Arbeitsbereich des Werkzeuggeräts entfernt werden kann. In einem zweiten Aspekt betrifft die Erfindung ein System aus mindestens zwei vorgeschlagenen Vorrichtungen. In einem weiteren Aspekt betrifft die Erfindung ein Verfahren zum Absaugen von Staub aus einem Arbeitsbereich eines Werkzeuggeräts. Die Vorrichtung umfasst Abschlusskappen, die über Absaugstutzen mit einer Staubsaugvorrichtung verbunden werden können. Ferner dienen die Abschlusskappen einer Abdichtung des Arbeitsraumes, in dem der Arbeitsvorgang des Werkzeuggeräts stattfindet.

## Beschreibung

Die vorliegende Erfindung betrifft eine Vorrichtung zum Abdecken eines mit einem Werkzeuggerät erzeugbaren Schnittspalts. Dabei kann die Vorrichtung mit einer Staubabsaugvorrichtung verbunden werden, so dass der Staub, der bei der Arbeit mit dem Werkzeuggerät entsteht, mit Hilfe des Staubabsauggeräts aus dem Arbeitsbereich des Werkzeuggeräts entfernt werden kann. In einem zweiten Aspekt betrifft die Erfindung ein System aus mindestens zwei vorgeschlagenen Vorrichtungen. In einem weiteren Aspekt betrifft die Erfindung ein Verfahren zum Absaugen von Staub aus einem Arbeitsbereich eines Werkzeuggeräts. Die Vorrichtung umfasst Abschlusskappen, die über Absaugstutzen mit einer Staubsaugvorrichtung verbunden werden können. Ferner dienen die Abschlusskappen einer Abdichtung des Arbeitsraumes, in dem der Arbeitsvorgang des Werkzeuggeräts stattfindet.

### Hintergrund der Erfindung:

Es ist hinlänglich bekannt, dass bei der Bearbeitung von Mauerwerk, festem Untergrund oder Beton Staub anfällt. Die Beseitigung von Staub ist in den letzten Jahren zu einem wichtigen Thema im Bereich der Werkzeuggerätentwicklung geworden. Insbesondere soll verhindert werden, dass Staub in die Atemwege der Nutzer von Werkzeuggeräten gelangt, weil der Staub dort zu gesundheitlichen Beeinträchtigungen führen kann. In vielen Verfahren, die aus dem Stand der Technik bekannt ist, wird Wasser oder ein anderes flüssiges Fluid verwendet, um den bei der Arbeit mit dem Werkzeuggerät anfallenden Staub zu binden, um ihn im gebundenen Zustand leicht aus dem Arbeitsbereich des Werkzeuggeräts abführen zu können. Insbesondere wird damit das Risiko reduziert, dass frei herumfliegender Staub in die Atemwege des Nutzers des Werkzeuggeräts gelangt.

Allerdings ist es auch bekannt, dass viele Arbeiten mit Werkzeuggeräten idealerweise nicht unter Verwendung von Wasser durchgeführt werden sollen. Dies gilt insbesondere für Bereiche auf einer Baustelle, in denen Wasser zu späteren Schäden oder sonstigen Beeinträchtigungen führen kann. Darüber hinaus führt die Verwendung von Wasser häufig zu Verunreinigungen. Es wird zwar versucht, diese Verunreinigungen mit speziell dafür vorgesehenen Vorrichtungen und Auffangvorrichtungen gering zu halten, beispielsweise indem das Schmutzwasser aufgefangen oder absaugt wird. Allerdings besteht ein großer Wunsch in der Fachwelt, auf die Verwendung von Wasser zur Staubbindung bei Arbeiten mit einem Werkzeuggerät verzichten zu können.

Um die Verwendung von Wasser zur Staubbindung auf Baustellen zu vermeiden, ist im Stand der Technik vorgeschlagen worden, Absaugvorrichtungen zu verwenden, die beispielsweise an einer Schutzvorrichtung für das Werkzeug des Werkzeuggeräts angebracht bzw. angeschlossen werden können. Allerdings hat sich gezeigt, dass diese oftmals direkt am Blattschutz angebrachten Absaugvorrichtungen häufig nicht in der Lage sind, den bei der Arbeit mit dem Werkzeuggerät anfallenden Staub in einem zufriedenstellenden Maße abzusaugen. Vielmehr muss häufig festgestellt werden, dass selbst bei Verwendung von starken Absaugvorrichtungen der Staub nur unzureichend abgesaugt werden kann, da der Staub beispielsweise aus dem bei der Arbeit mit dem Werkzeuggerät entstehenden Schnittspalt herausgeschleudert wird.

Die Aufgabe, die der vorliegenden Erfindung zugrunde liegt, besteht demnach darin, die vorstehend beschriebenen Nachteile und Mängel des Standes der Technik zu überwinden und eine Vorrichtung, ein System und ein Verfahren bereitzustellen, mit denen insbesondere eine Trockenanwendung von Werkzeuggeräten ermöglicht werden soll. Dabei soll es insbesondere ermöglicht werden, auf den Einsatz von Wasser zur Staubbindung verzichten zu können, um so sauberere Baustellen hinterlassen und das Risiko für spätere Wasserschäden minimieren zu können. Wünschenswert wäre es, wenn die Erfindung die Arbeit mit dem Werkzeuggerät nicht erschweren würde und die Erfindung einfach zu handhaben und zu benutzen wäre. Darüber hinaus soll mit der Erfindung eine möglichst wirksame und vollständige Absaugung des bei der Arbeit mit dem Werkzeuggerät entstehenden Staubs ermöglicht werden, um das staubbedingte Gesundheitsrisiko für den Nutzer der Werkzeugmaschine möglichst gering zu halten.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zum Abdecken eines mit einem Werkzeuggerät erzeugbaren Schnittspalts, insbesondere bei einer Trockenanwendung vorgesehen. Die Vorrichtung ist dadurch gekennzeichnet, dass sie den Schnittspalt in einem Arbeitsbereich des Werkzeuggeräts bedeckt, wobei die Vorrichtung Mittel zum Anschluss einer Vorrichtung zur Staubabsaugung aufweist. Es ist im Sinne der Erfindung bevorzugt, dass die Vorrichtung den Schnittspalt im Wesentlichen vollständig bedeckt, so dass eine besonders effektive Staubentfernung aus dem Arbeitsbereich des Werkzeuggeräts erreicht werden kann.

Es ist im Sinne der Erfindung bevorzugt, dass es sich bei der Vorrichtung um eine Schiene oder eine Abdeckschiene handelt. Eine solche Schiene wird vorzugsweise in Verbindung mit einem Werkzeuggerät und einer Staubabsaugvorrichtung verwendet, um Staub aus einem Arbeitsbereich des Werkzeuggeräts zu entfernen. Der Begriff «Arbeitsbereich des Werkzeuggeräts» ist für den Fachmann kein unklarer Begriff. Gemeint ist damit im Sinne der Erfindung bevorzugt der Bereich eines zu bearbeitenden Untergrunds, in dem das Werkzeug des Werkzeuggeräts den Untergrund berührt, so wie Raumbereiche vor und hinter dieser Kontaktfläche. Die Größe des Arbeitsbereiches kann beispielsweise von der Größe des Werkzeuggeräts oder des verwendeten Werkzeugs abhängig sein. Beispielsweise kann der Begriff «Arbeitsbereich des Werkzeuggeräts» einen Bereich von ca. 50 cm vor und ca. 50 cm hinter dem Kontaktbereich zwischen Werkzeug und Untergrund umfassen. Der daraus resultierende Arbeitsbereich kann dann beispielsweise ca. 1 m lang sein. Der Arbeitsbereich kann aber auch abweichende Dimensionen aufweisen.

Die Begriffen «vorne» und «hinten» stellen für den Fachmann keine unklaren Begriffe dar, weil der Fachmann weiß, dass die Raumrichtung «nach vorne» durch eine Arbeitsrichtung des Werkzeuggeräts festgelegt werden kann, während der hintere Raumbereich den Bereich im Schnittspalt festlegen kann, der bereits von dem Werkzeuggerät bearbeitet wurde und/oder der quasi «hinter» dem Werkzeuggerät liegt. Es ist im Sinne der Erfindung bevorzugt, dass sowohl der Raum- bzw. Arbeitsbereich vor dem Werkzeuggerät abgedeckt wird, als auch der Raum- und/oder Arbeitsbereich, der hinter dem Werkzeuggerät liegt. Dabei kann beispielsweise der Raum- bzw. Arbeitsbereich hinter dem Werkzeuggerät ohne Abschlusskappe bzw. ohne Anschluss einer Staubsaugvorrichtung ausgebildet sein. Es ist im Sinne der Erfindung ganz besonders bevorzugt, dass die Länge eines Arbeitsbereichs des Werkzeuggeräts mit einer Länge der Abdeckschiene korrespondiert. Das bedeutet im Sinne der Erfindung vorzugsweise, dass die Abdeckschiene und der Arbeitsbereich des Werkzeuggeräts im Wesentlichen ähnliche Längen aufweisen. Es ist im Sinne der Erfindung besonders bevorzugt, die Abdeckschiene möglichst flach auszugestalten, um keine Schnitttiefe einzubüßen und so besonders tiefe Schnitte mit dem Werkzeuggerät zu ermöglichen.

Es ist im Sinne der Erfindung bevorzugt, dass die Schnitte, die mit dem Werkzeuggerät erzeugt werden, zwischen 0,8 und 3 m lang sind. Es können allerdings auch Schnitte, die eine Länge in einem Bereich von 0,1 bis 10 m aufweisen, erzeugt und mit der vorgeschlagenen Abdeckschiene abgedeckt werden. Insbesondere sind Schnittlängen zwischen 0 und 10 m, sowie alle Zwischenwerte bevorzugt. Bei langen Schnitten von beispielsweise länger als 2 m kann vorzugsweise eine Abdeckschiene verwendet werden, die eine zu der Schnittlänge korrespondierende Länge aufweist. Alternativ kann eine Abdeckschiene verwendet werden, die sich aus mehreren Einzelschienen zusammensetzen lässt. Beispielsweise kann ein 6 m langer Schnitt mit drei Schienen abgedeckt werden, die jeweils 2 m lang sind. Die einzelnen Abschnitte können - wie im Beispiel - gleich lang sein oder unterschiedliche Längen aufweisen. Es kann im Sinne der Erfindung auch bevorzugt sein, den zu erzeugenden Schnitt in mehrere Teilabschnitte aufzuteilen und die Schnitte einzeln bzw. getrennt voneinander zu erzeugen. Dabei können die bereits erzeugten Schnitte gegenüber dem aktuell erzeugten Schnitt abgedichtet werden, um einen unerwünschten Staubsaustritt an den Übergangsbereichen zwischen den Schnitten zu vermeiden.

Die Länge der Abdeckschiene wird vorzugsweise durch die beiden Enden der Schiene festgelegt, die im Sinne der Erfindung vorzugsweise als erstes und zweites Ende oder vorderes und hinteres Ende der Vorrichtung bezeichnet werden. Insbesondere entspricht die Länge der Vorrichtung im Wesentlichen dem Abstand der beiden Abschlusskappen, die an mindestens einem der beiden Schienenenden vorgesehen sind.

Es ist im Sinne der Erfindung bevorzugt, dass es sich bei dem Werkzeuggerät um eine Säge handelt. Insbesondere kann es sich um eine Wandsäge handeln, die dazu eingerichtet ist, vorzugsweise vertikal stehende Wände zu scheiden oder zu durchtrennen bzw. Schnitte oder Spalte in solche Wände einzubringen. Es kann im Kontext der vorliegenden Erfindung auch bevorzugt sein, Bauteile oder Komponenten von zu errichtenden Gebäuden, Böden oder Decken, zuzuschneiden oder zu durchtrennen. Es kann im Sinne der Erfindung auch bevorzugt sein, dass das Werkzeuggerät ein Trennschleifer ist. Vorzugsweise weist das Werkzeuggerät einen Motor auf, der mit Hilfe von Batterien, Akkumulatoren und/oder über eine Verbindung zum öffentlichen Energienetz mit Energie versorgt werden kann. Bei dem Werkzeug des Werkzeuggeräts kann es sich bevorzugt um ein Sägeblatt oder eine Trennscheibe handeln. Für speziellen Anwendungen kann der Einsatz von diamantbesetzten Sägeblättern oder Trennscheiben bevorzugt sein.

Bei der Arbeit mit dem Werkzeuggerät in dem zu bearbeitenden Untergrund wird ein Schnittspalt erzeugt, der im Sinne der Erfindung bevorzugt auch als Schnittfuge bezeichnet werden kann.

Bei dem zu bearbeitenden Untergrund kann es sich vorzugsweise um vertikal stehende Wände, einen ebenen Untergrund, wie eine Bodenfläche oder eine Decke, handeln. Der Arbeitsvorgang mit dem Werkzeuggerät stellt im Sinne der Erfindung bevorzugt ein Sägen, Schneiden oder Trennen des zu bearbeitenden Untergrunds dar. Der zu bearbeitende Untergrund kann Mauerwerk, Gestein, Beton und/oder andere mineralische Untergründe umfassen. Bei der Bearbeitung des Untergrunds fällt üblicherweise Staub an, der vorzugsweise Partikel dieses Untergrundmaterials beinhaltet.

Der Begriff «Trockenanwendung» ist im Sinne der Erfindung bevorzugt so zu verstehen, dass damit ein Säge-, Schneide- oder Trennprozess, bei dem kein Wasser oder sonstiges flüssiges Fluid zur Staubbindung verwendet wird, gemeint ist. Es stellt einen besonderen Vorteil der Erfindung dar, dass mit der Erfindung eine Möglichkeit bereitgestellt werden kann, ohne die Verwendung von Wasser zur Staubbindung zu sägen oder zu schneiden und dennoch für den Nutzer des Werkzeuggeräts im Wesentlichen staubfrei arbeiten zu können. Die Fachwelt war bisher davon ausgegangen, dass entweder Absaugvorrichtungen direkt an der Schutzvorrichtung des Sägeblattes oder der Trennscheibe ausreichen, um eine ausreichende Staubabsaugung oder -bindung zu erreichen, oder dass die Verwendung von Wasser erforderlich ist, um zu verhindern, dass Staub in die Atemwege des Nutzers gelangt. Mit der vorliegenden Erfindung kann vorteilhafterweise auf die Verwendung von Wasser verzichtet werden, so dass eine saubere und trockene Baustelle hinterlassen werden kann. Dies ist insbesondere dann von Vorteil, wenn an feuchtigkeitskritischen Orten gearbeitet werden soll, an denen die Verwendung von Wasser unerwünschterweise zu Verschmutzungen oder Wasserschäden führen kann.

Es ist im Sinne der Erfindung bevorzugt, dass die Vorrichtung ein erstes Ende und ein zweites Ende aufweist. Vorzugsweise liegen die Mittel zum Anschluss einer Vorrichtung zur Staubabsaugung an einem Ende oder an beiden Enden der Abdeckschiene vor. Die Abschlusskappen können allerdings auch an jeder anderen denkbaren Position an der Vorrichtung vorliegen. Es ist im Sinne der Erfindung besonders bevorzugt, dass die Abschlusskappen demontierbar oder fest mit dem Absaugkanal verbunden sein können. Wenn die Vorrichtung als Abdeckschiene ausgebildet ist, die zusammen mit einem Werkzeuggerät verwendet wird, kann beispielsweise ein vorderes Ende der Vorrichtung dadurch definiert werden, dass es in einer Arbeitsrichtung des Werkzeuggeräts liegt. Insbesondere kann das vordere Ende der Abdeckschiene dadurch festgelegt werden, dass sich das Werkzeuggerät während des Arbeitsvorgangs auf das vordere Ende der Abdeckschiene zu bewegt. Das hintere Ende der Vorrichtung kann vorzugsweise dadurch festgelegt werden, dass der Arbeitsvorgang am hinteren Ende oder in räumlicher Nähe zu dem hinteren Ende der Abdeckschiene beginnt und dass sich das Werkzeuggerät während des Arbeitsvorgangs immer weiter von dem hinteren Ende entfernt. Es ist erfindungsgemäß vorgesehen, dass die Vorrichtung an einem Ende oder an beiden Enden Mittel zum Anschluss einer Vorrichtung zur Staubabsaugung aufweist. Diese Mittel werden im Sinne der Erfindung vorzugsweise auch als Anschlussmittel bezeichnet. Sie können beispielsweise Saugstutzen umfassen. Vorzugsweise bilden sie Abschlusskappen zum Anschluss einer Vorrichtung zur Staubabsaugung. Bei der Vorrichtung zur Staubabsaugung kann es sich vorzugsweise um eine Staubabsaugvorrichtung, wie einen Staubsauger oder einen Entstauber, handeln. Mit anderen Worten kann es im Sinne der Erfindung bevorzugt sein, dass die Vorrichtung an einem vorderen Ende oder an einem hinteren Ende oder an beiden Enden Mittel zum Anschluss einer Staubabsaugvorrichtung aufweist. Vorzugsweise sind die Anschlussmittel dazu eingerichtet, eine Verbindung zwischen Vorrichtung und Staubabsaugvorrichtung herzustellen, d.h. dass die Staubabsaugvorrichtung vorzugsweise unter Verwendung der Anschlussmittel mit der vorgeschlagenen Abdeckschiene verbunden werden kann. Es ist im Sinne der Erfindung ganz besonders bevorzugt, dass der Anschluss für die Staubsaugvorrichtung in einem Bereich der Abdeckschiene angeordnet ist, in den der Staub durch die Rotation des Werkzeugs des Werkzeuggeräts transportiert bzw. geschleudert wird. Dadurch wird vorteilhafterweise eine besonders effektive und bedarfsgerechte Staubabsaugung ermöglicht.

Es ist im Sinne der Erfindung bevorzugt, dass die Mittel zum Anschluss einer Staubabsaugvorrichtung dazu eingerichtet sind, die Vorrichtung auf einen zu bearbeitenden Untergrund zu drücken. Dadurch wird vorteilhafterweise das Auftreten von Lücken oder Freiräumen besonders wirksam vermieden, durch die Staub austreten und in die Atemwege des Nutzers gelangen könnte. Außerdem ermöglicht das Niederhalten der Abdeckschiene auf den zu bearbeitenden Untergrund, dass ein besonders genaues Arbeiten und eine gerade Schnittführung ermöglicht werden. Vorzugsweise unterstützt die Andrückfunktion der Abschlusskappen die Ausbildung eines im Wesentlichen dichten Staubraums, der vorzugsweise den Schnittspalt umfasst und in einer Raumrichtung «nach oben» von der vorgeschlagenen Vorrichtung abgedeckt wird. Insbesondere ermöglichen die Abschlusskappen eine wirksame Abdichtung dieses im Wesentlichen dichten Staubraums an den Enden der Abdeckschiene.

Es ist im Sinne der Erfindung insbesondere bevorzugt, dass die Anschlussmittel dazu eingerichtet sind, den Schnittspalt an den Enden nach außen abzudichten bzw. abzuschließen. Dadurch wird der Staub in der Schnittfuge festgehalten bzw. eingeschlossen, bis er mit Hilfe der Staubabsaugvorrichtung aus der Schnittfuge entfernt werden kann. Insbesondere ermöglicht es die Abdichtung des Arbeitsbereichs des Werkzeuggeräts, dass der Staub daran gehindert wird, den Arbeitsbereich bzw. den Schnittspalt zu verlassen und in die Atemwege des Nutzers zu gelangen. Es ist im Sinne der Erfindung ganz besonders bevorzugt, dass die Abdeckschiene mit ihren Abschlusskappen dazu eingerichtet ist, einen im Wesentlichen geschlossenen Staubraum zu bilden, in dem der Staub so lange gesammelt werden kann, bis er mit Hilfe der Staubabsaugvorrichtung aus dem Staubraum abgesagt werden kann.

In einer Ausgestaltung der Erfindung ist es bevorzugt, dass die Vorrichtung einen vorgefertigten Spalt für eine Aufnahme eines Werkzeugs des Werkzeuggeräts während eines Arbeitsprozesses umfasst. Mit anderen Worten kann die Vorrichtung einen vorgefertigten Spalt zur Aufnahme eines Sägeblattes oder einer Trennscheibe aufweisen. Insbesondere kann sich das Werkzeug in dem vorgefertigten Spalt linear nach vorne und nach hinten bewegen, so dass das Werkzeuggerät bzw. das Werkzeug durch den vorgefertigten Spalt vorteilhafterweise auch geführt werden kann. Bei der Verwendung einer Vorrichtung gemäß dieser Ausgestaltung der Erfindung kann das Werkzeug des Werkzeuggeräts besonders gut innerhalb der Vorrichtung geführt werden, so dass ein besonders genaues und geradliniges Schnitt- oder Trennergebnis erzielt werden kann. Darüber hinaus kann eine Abdeckschiene mit einem vorgefertigten Spalt wiederverwendet werden. Darüber hinaus kann aufgrund des bereits bestehenden Spalts in der Abdeckschiene besonders schnell gearbeitet werden, so dass diese Ausgestaltung der Erfindung ein besonders effizientes, zeitoptimiertes Arbeiten mit dem Werkzeuggerät ermöglicht. In dieser Ausführungsform der Erfindung kann die Abdeckschiene beispielsweise auch teleskopartig ausgebildet sein, um eine Abdeckung von Schnitten von variabler Länge zu ermöglichen.

Es ist im Sinne der Erfindung bevorzugt, dass die Vorrichtung Bürsten umfasst, die in den vorgefertigten Spalt hineinragen. Dadurch kann eine Austrittsfläche für den Staub durch den vorgefertigten Spalt klein gehalten und die Menge an effektiv austretenden Staub weiter erheblich reduziert werden. Es ist im Sinne der Erfindung bevorzugt, dass die Bürsten aus einem hitzebeständigen Material bestehen bzw. ein solches umfassen, da Tests gezeigt haben, dass Bürsten aus Kunststoff durch die reibungsbedingte Wärmeentwicklung beeinträchtigt werden können. Darüber hinaus kann durch die Vorsehung der Bürsten eine Reinigung des Werkzeugs des Werkzeuggerät erreicht werden, so dass das Werkzeug nach Beendigung der Arbeit in einem sauberen Zustand eingelagert werden kann bzw. das eine aufwändige und personalintensive Reinigung des Werkzeugs nach Abschluss der Arbeiten mit dem Werkzeuggerät entfallen kann. Dadurch können vorteilhafterweise Personal- und Arbeitskosten eingespart werden bzw. die Mitarbeiter können mehr Zeit mit anderen Arbeiten verbringen.

In einer anderen Ausgestaltung der Erfindung ist es bevorzugt, dass ein Spalt für eine Aufnahme eines Werkzeugs des Werkzeuggeräts erst während eines Arbeitsprozesses in die Vorrichtung eingebracht wird. Damit ist insbesondere gemeint, dass ein Spalt zur Aufnahme des Sägeblattes oder der Trennscheibe während des Arbeitsprozesses des Werkzeuggeräts in die Abdeckschiene eingebracht wird. Dabei erfolgt das Einbringen vorzugsweise durch das Werkzeug des Werkzeuggeräts selbst. Das bedeutet im Sinne der Erfindung bevorzugt, dass zunächst kein vorgefertigter Spalt für das Sägeblatt der Säge oder die Trennscheibe des Trennschleifers in der Schiene vorgesehen ist. Vielmehr wird in dieser Ausführungsform der Erfindung der Spalt, durch den der Säge- oder Trennvorgang erfolgt, während des Vorgangs in die Vorrichtung hineingeschnitten. Dadurch kann die Ausgestaltung des Spalts besonders gut an die konkreten Erfordernisse des Arbeitsprozesses angepasst werden. Dies ermöglicht vorteilhafterweise eine besonders wirksame, effektive und bedarfsgerechte Staubabsaugung durch die vorgeschlagene Vorrichtung, da der Spalt nur dort existiert, wo das Werkzeuggerät tatsächlich arbeitet. Insbesondere ermöglicht diese Ausgestaltung der Erfindung eine örtlich stark auf den Arbeitsbereich des Werkzeuggeräts fokussierte Staubabsaugung durch die Staubabsaugvorrichtung. In dieser bevorzugten Ausgestaltung der Erfindung kann die Abdeckschiene als kostengünstiges Einmalprodukt vertrieben werden. Dadurch kann insbesondere auf die exakt fluchtende Ausrichtung der Absaugung mit dem Schnitt verzichtet werden, so dass eine schnellere und einfachere Montage der Abdeckschiene ermöglicht wird. Vorzugsweise wird eine konkrete Schnittlänge kurz vor Erzeugung des Schnitts festgelegt. Insofern kann die Abdeckschiene in dieser bevorzugten Ausgestaltung der Erfindung vor Ort, beispielsweise auf einer Baustelle, an die konkreten Erfordernisse des Einzelfalls angepasst werden. Beispielsweise kann die Abdeckschiene als Stangenware mit einer Länge von z.B. 3 m angeboten werden, wobei ein Nutzer vor Ort die Schiene bzw. die Stange auf eine erforderliche Länge ablängen bzw. zuschneiden kann.

Es ist im Sinne der Erfindung bevorzugt, dass die vorgeschlagene Abdeckschiene in Verbindung mit einer Führungsschiene für das Werkzeuggerät verwendbar ist oder Bestandteil einer solchen Führungsschiene ist. Es ist im Sinne der Erfindung bevorzugt, dass die Schnittabdeckung an einer Führungsschiene, die beispielsweise in Zusammenhang mit einer Säge verwendet wird, befestigt vorliegt. Dadurch kann vorteilhafterweise der Aufwand für die Montage und das parallele Ausrichten zum Schnitt erheblich reduziert werden. Es ist im Sinne der Erfindung bevorzugt, dass die Führungsschiene ihrerseits Bestandteil eines Führungssystems ist. Es ist im Sinne der Erfindung ganz besonders bevorzugt, dass die vorgeschlagene Abdeckschiene Bestandteil eines solchen Führungssystems ist. Das Führungssystem kann beispielsweise auch Füße für die Führungsschiene umfassen, wobei diese Füße vorzugsweise auch als "Führungsfüße" bezeichnet werden können. Führungsschienen können beispielsweise verwendet werden, um eine geradlinige Schnittführung zu ermöglichen. Vorteilhafterweise kann die Erfindung mit bekannten Führungsschienen, die aus dem Stand der Technik bekannt sind, kombiniert werden bzw. zusammen verwendet werden. Es ist im Sinne der Erfindung ganz besonders bevorzugt, dass die Abdeckschiene Bestandteil einer Führungsschiene ist. Insbesondere werden durch die kombinierte Anwendung von Abdeck- und Führungsschiene Synergieeffekte möglich und es müssen weniger Teile auf einer Baustelle mitgeführt werden.

Es ist im Sinne der Erfindung bevorzugt, dass die vorgeschlagene Abdeckschiene auch auf ihrer Rückseite eine Abdeckung aufweist. Diese Ausgestaltung der Erfindung ist besonders dann vorteilhaft, wenn die Schiene mit einer Säge zusammen verwendet wird, wobei mit der Säge ein Objekt, wie zum Beispiel ein Bauteil, zerschnitten wird. Dazu ist es zweckmäßig, dass auch die Rückseite der Abdeckschiene mit einer Abdeckung ausgestattet ist, um einen Staubsaustritt auf der Rück- oder Unterseite der Abdeckschiene zu vermeiden. Es ist im Sinne der Erfindung bevorzugt, dass eine solche rückseitige Abdeckung der Vorrichtung nicht von einem Werkzeug, wie zum Beispiel dem Sägeblatt, durchdrungen wird.

Es hat sich gezeigt, dass die Montage einer Abdeckschiene auf der Rückseite besonders dann vorteilhaft ist, wenn bei der Arbeit mit einem Werkzeuggerät, das beispielsweise eine Säge ist, der zu bearbeitende Untergrund, der zu durchtrennende Boden oder das zu bearbeitende Bauteil vollständig durchtrennt werden soll. Insbesondere verhindert die Vorsehung der Abdeckschiene auf der Rückseite einen unerwünschten Staubsautritt in diesem Bereich. Für die Abdeckung kann beispielsweise eine U-Profil verwendet werden, welches vorzugsweise auf beiden Seiten verschlossen ist. Alternativ kann der rückseitige Schnittbereich auch mit einer Folie überklebt werden, damit kein Staub austritt.

In einem zweiten Aspekt betrifft die Erfindung ein System aus mindestens zwei vorgeschlagenen Vorrichtungen. Das System ist dadurch gekennzeichnet, dass die mindestens zwei Vorrichtungen ineinanderschiebbar ausgebildet sind. Mit anderen Worten können die mindestens zwei Vorrichtungen ineinandergeschoben werden und vorzugsweise so miteinander verbunden werden, dass sie eine verlängerte Abdeckschiene bilden. Dadurch können mit dem Werkzeuggerät längere Schnitte angefertigt werden, wobei vorteilhafterweise auch bei der Erzeugung dieser längeren Schnitte durch das vorgeschlagene System eine wirksame Staubabsaugung sichergestellt werden kann.

Die für die Vorrichtung eingeführten Begriffe, Definitionen und technischen Vorteile gelten vorzugsweise für das System und das im folgenden beschriebene Verfahren analog.

In einem weiteren Aspekt betrifft die Erfindung ein Verfahren zum Absaugen von Staub aus einem Arbeitsbereich eines Werkzeuggeräts. Das vorgeschlagene Verfahren umfasst die folgenden Schritte:
a) Bereitstellung einer vorgeschlagenen Vorrichtung oder eines vorgeschlagenen Systems,
b) Abdeckung des Arbeitsbereiches des Werkzeuggeräts mit der Vorrichtung oder einer Vorrichtung des Systems,
c) Verbindung der Vorrichtung oder einer Vorrichtung des Systems mit einer Vorrichtung zur Staubabsaugung,
d) Durchführung eines Arbeitsvorgangs mit dem Werkzeuggerät,
d) Absaugung des bei dem Arbeitsvorgang entstehenden Staubs mit der Vorrichtung zur Staubabsaugung.

Es ist im Kontext des Absaug-Verfahrens vorgesehen, dass Vorrichtungen, wie Abdeckschienen, verwendet werden, um den Schnittspalt, der bei der Arbeit mit einem Werkzeuggerät entsteht, zu bedecken. Die Bedeckung des Schnittspalts führt vorzugsweise zu einer Abdeckung des Arbeitsbereiches des Werkzeuggeräts, so dass der bei der Arbeit mit dem Werkzeuggerät entstehende Staub nicht aus dem Arbeitsbereich des Werkzeuggeräts entweichen kann, sondern vorteilhafterweise an Ort und Stelle von der Staubabsaugvorrichtung abgesagt wird. Dazu weist die Vorrichtung an ihren Enden Mittel zum Anschluss einer Staubabsaugvorrichtung auf. Die Verbindung zwischen der Vorrichtung oder einer Vorrichtung des Systems und einer Staubabsaugvorrichtung kann vorzugsweise mit einem Saugschlauch hergestellt werden, wobei der Saugschlauch an den Anschlussmitteln in die Vorrichtung einmünden kann. Ein zweites Ende des Saugschlauches ist vorzugsweise mit der Staubabsaugvorrichtung verbunden, so dass eine besonders staubdichte Verbindung zwischen Abdeckschiene und Staubsauger hergestellt werden kann.

Es kann im Sinne der Erfindung bevorzugt sein, dass zunächst die Staubabsaugung eingeschaltet wird und anschließend mit der Durchführung des Arbeitsvorgangs mit dem Werkzeuggerät begonnen wird. Es kann im Sinne der Erfindung aber auch bevorzugt sein, dass zunächst mit der Schneid- oder Trennarbeit mit dem Werkzeuggerät begonnen wird und die Staubabsaugung zugeschaltet wird. Das Ein- oder Ausschalten der Staubabsaugung und/oder des Werkzeuggeräts kann beispielsweise manuell durch einen Nutzer des Werkzeuggeräts erfolgen. Es kann allerdings im Sinne der Erfindung auch bevorzugt sein, dass das Werkzeuggerät und/oder die Sauggerät so ausgebildet sind, dass Daten so ausgetauscht werden, so dass sich die Geräte in ihrer Steuerung beeinflussen. Beispielsweise kann das Werkzeuggerät Daten, die seinen Betrieb betreffen, an das Staubsauggerät übermitteln, so dass sich das Staubsauggerät aufgrund der empfangenen Daten selbsttätig ein- oder ausschaltet. Dadurch kann der Betrieb des Sauggeräts beispielsweise so gestaltet werden, dass das Sauggerät nur dann läuft, wenn auch gleichzeitig das Werkzeuggerät betrieben wird. Dadurch kann das Sauggerät vorteilhafterweise besonders bedarfsgerecht und energiesparend arbeiten. Es kann im Sinne der Erfindung auch bevorzugt sein, dass das Sauggerät Daten, die seinen Betrieb betreffen, an das Werkzeuggerät übermittelt, so dass das Werkzeuggerät aufgrund der empfangenen Daten seinen Betrieb entsprechend einstellt oder regelt. Beispielsweise kann auch eine von der Staubsaugvorrichtung empfangene Information auf einer Anzeigenvorrichtung des Werkzeuggeräts angezeigt werden. Wenn zum Beispiel das Staubsauggerät feststellt, dass sein Staubfilter oder sein Staubbeutel voll ist, so dass ein Austausch oder eine Abreinigung erforderlich ist, kann das Staubsauggerät diese Information an das Werkzeuggerät übermitteln und das Werkzeuggerät kann diese Information beispielsweise auf einem Display oder einem Bildschirm anzeigen. Es ist im Sinne der Erfindung auch bevorzugt, dass das Werkzeuggerät selbsttätig in der Lage ist, einen Arbeitsprozess zu unterbrechen. Beispielsweise kann eine Wandsäge in einem Automatikmodus selbständig einen Sägevorgang unterbrechen, wenn eine Absaugleistung der Staubsaugvorrichtung nachlässt. Es kann im Kontext der Erfindung auch bevorzugt sein, dass ein optisches Anzeigemittel am Werkzeuggerät vorgesehen ist, mit dem der Nutzer auf die Informationen bzw. ihren Inhalt hingewiesen wird. Beispielsweise kann eine rote LED am Werkzeuggerät zu leuchten beginnen, wenn das Werkzeuggerät die Information erhält, dass der Staubfilter oder -beutel des Staubsauggeräts ausgetauscht werden muss. Die Übermittlung und der Austausch von Daten zwischen Werkzeuggerät und Staubsaugvorrichtung kann uni- oder bidirektional ausgebildet sein. Ferner kann es bevorzugt sein, dass die Kommunikation zwischen Werkzeuggerät und Staubsaugvorrichtung leitungsgebunden und/oder leitungslos ausgebildet ist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Seitenansicht einer bevorzugten Ausgestaltung der Vorrichtung
- Fig. 2: schräge Seitenansicht einer bevorzugten Ausgestaltung der Vorrichtung
- Fig. 3: schräge Seitenansicht einer bevorzugten Ausgestaltung der Vorrichtung
- Fig. 4: Draufsicht auf eine bevorzugte Ausgestaltung der Vorrichtung
- Fig. 5: weitere Seitenansicht einer bevorzugten Ausgestaltung der Vorrichtung

### Ausführungsbeispiele und Figurenbeschreibung:

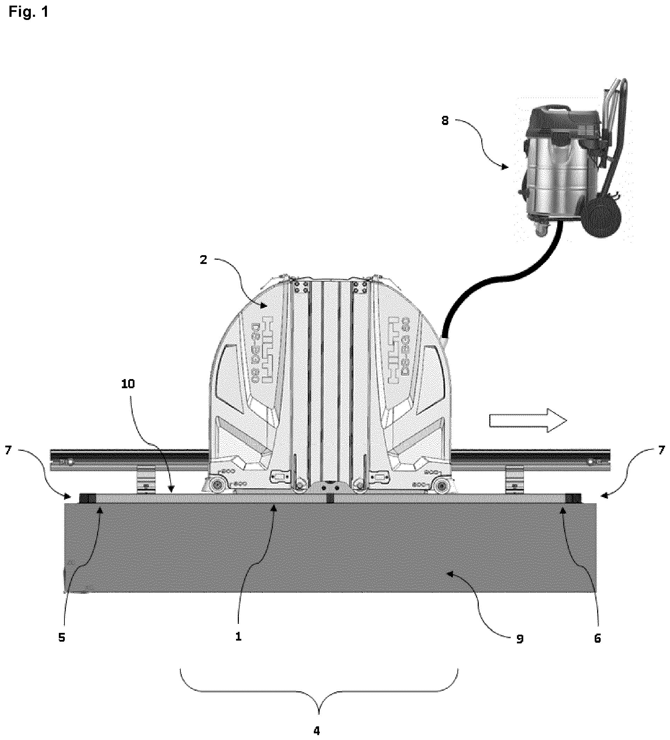

Figur 1 zeigt eine bevorzugte Ausgestaltung einer vorgeschlagenen Vorrichtung (1). Beispielsweise soll in einen Untergrund (9) mit dem Werkzeuggerät (2, symbolisiert durch den Blattschutz des Werkzeugs) ein Schnitt eingebracht werden oder es sollen zwei Bereiche des Untergrundes (9) voneinander getrennt werden. Das Werkzeuggerät (2) kann beispielsweise eine Säge, insbesondere eine Wandsäge oder ein Trennschleifer, sein. Das Werkzeug (11, nicht dargestellt) des Werkzeuggeräts (2) kann beispielsweise ein Sägeblatt oder eine Trennscheibe sein, die vorzugsweise mit Diamantsplittem oder Diamantkörnern versehen sein können, um die Schneidwirkung zu verbessern. Durch das Schneiden oder Trennen mit dem Werkzeuggerät (2) wird in dem Untergrund (9) ein Schnittspalt (3, nicht dargestellt) erzeugt, der einen Arbeitsbereich (4) des Werkzeuggeräts (2) festlegen oder mit diesem zusammenfallen kann. Der Arbeitsbereich (4) des Werkzeuggeräts (2) wird vorzugsweise durch den Bereich festgelegt, in dem das Werkzeug (11) und der zu bearbeitende Untergrund (9) miteinander Kontakt haben, sowie durch die sich anschließenden Raumbereiche, die sich vorzugsweise in eine Raumrichtung «nach vorne» und in einer Raumrichtung «nach hinten» erstrecken. Der Kontaktbereich zwischen Werkzeug (11) und Untergrund (9) wird in Fig. 1 durch die Markierung in der Vorrichtung (1) in der Mitte von Fig. 1 angedeutet. Es kann im Sinne der Erfindung bevorzugt sein, dass der Arbeitsbereich (4) mit einer Länge der Vorrichtung (1) zusammenfällt oder mit dieser korrespondiert.

Die Vorrichtung (1) ist dazu eingerichtet, den Schnittspalt (3) abzudecken, so dass vorteilhafterweise ein abgeschlossener Staubraum entsteht. Dieser Staubraum kann ebenfalls mit dem Arbeitsbereich (4) des Werkzeuggeräts (2) zusammenfallen. Die Vorrichtung (1) kann im Sinne der Erfindung bevorzugt auch als Abdeckschiene bezeichnet werden. An den Enden (5, 6) der Abdeckschiene (1) sind Abschlusskappen (7) vorgesehen. Diese Abschlusskappen (7) können Anschlussmittel zur Verbindung mit einer Staubsaugvorrichtung (8) umfassen. Insbesondere können sie Absaugstutzen aufweisen. Sie können ferner dazu ausgebildet sein, die Abdeckschiene (1) auf den zu bearbeitenden Untergrund (9) zu pressen, um den Staubraum auf diese Weise besonders wirksam abzudichten. Vorzugsweise dient insbesondere ein unterer Bereich der Abschlusskappen (7) zum Niederhalten der Vorrichtung (7), während ein oberer Bereich der Abschlusskappe (7) einen Absaugstutzen zur Verbindung mit einer Staubsaugvorrichtung (8) umfassen kann.

Es ist im Sinne der Erfindung bevorzugt, dass die Werkzeugmaschine (2) entlang der Vorrichtung (1) durch den Untergrund (9) schneidet oder unterschiedliche Bereich des Untergrundes (9) voneinander trennt. Dabei führt das Werkzeuggerät (2) vorzugsweise eine lineare bzw. geradlinige Bewegung aus. Das Werkzeuggerät (2) kann von einem Nutzer beispielsweise ausgehend von einem ersten Ende (5) der Abdeckschiene (1) in Richtung eines zweiten Endes (6) der Abdeckschiene (1) bewegt werden. Diese Vorwärtsbewegung des Werkzeuggeräts (2) ist in Fig. 1 durch den Pfeil in der rechten Bildhälfte angedeutet. Insofern kann das erste Ende (5) der Vorrichtung bevorzugt auch als hinteres Ende (5) der Abdeckschiene (1) bezeichnet werden, während das zweite Ende (6) der Vorrichtung (1) vorzugsweise auch als vorderes Ende (6) der Abdeckschiene (1) bezeichnet werden kann.

Das Werkzeuggerät (2) kann mit einer Staubsaugvorrichtung (8) verbunden vorliegen. Beispielsweise kann an dem Blattschutz, der das Werkzeug (11) des Werkzeuggeräts (2) schützt, ein Absaugstutzen vorgesehen sein. Zwischen diesem Absaugstutzen des Werkzeuggeräts (2) und der Staubsaugvorrichtung (8) kann ein Saugschlauch angeordnet vorliegen, durch den der abgesaugte Staub aus dem geschlossenen Staubraum in einen Staubsammelbehälter in der Staubsaugvorrichtung (8) abtransportiert wird. Der Saugschlauch ist in Fig. 1 durch eine geschwungene Verbindungslinie zwischen Werkzeuggerät (2) und Staubsaugvorrichtung (8) angedeutet.

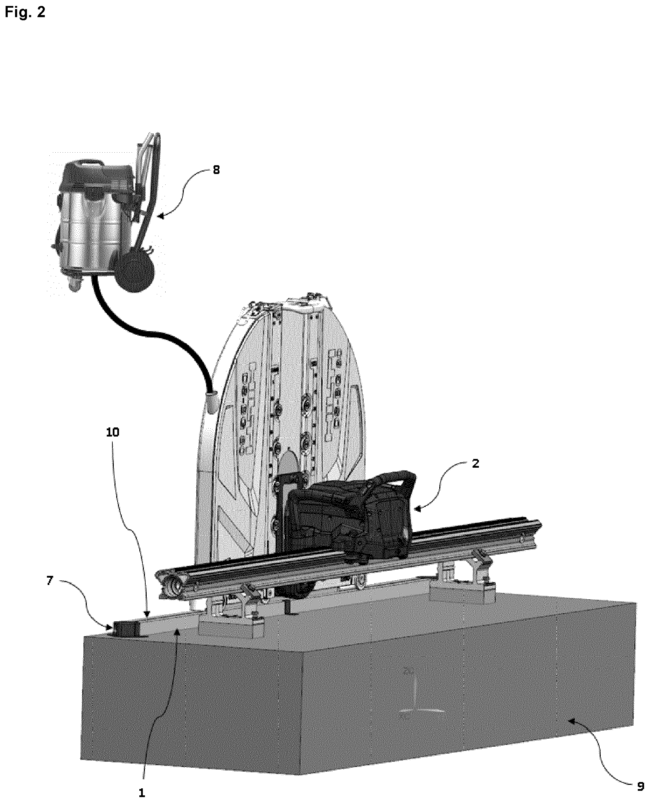

Figur 2 zeigt eine schräge Seitenansicht einer bevorzugten Ausgestaltung der vorgeschlagenen Abdeckschiene (1). Zu sehen ist in Fig. 2 das Werkzeuggerät (2), das einen Schnitt oder eine Fuge in einen Untergrund (9) einbringt. Dadurch wird ein Schnittspalt (3, nicht dargestellt) gebildet. Durch die Arbeit mit dem Werkzeuggerät (2) wird Staub erzeugt, der zum Teil in dem Schnittspalt (3) verbleibt, aber auch aus dem Spalt (3) herausgeschleudert werden kann. Im Kontext der vorliegenden Erfindung gelangt der Staub in einen geschlossenen Staubraum, der von dem Spalt (3) und der Abdeckschiene (1) gebildet wird. Insbesondere bildet die Abdeckschiene (1) eine Begrenzung des im Wesentlichen geschlossenen Staubraums nach oben. An den Seiten, d.h. an den Enden (5, 6) der Abdeckschiene (1) liegen Abschlusskappen (7) vor, die dazu eingerichtet sind, den Staubraum in eine Raumrichtung «nach vorne» und in eine Raumrichtung «nach hinten» abzudichten. Die Abschlusskappen (7) können jeweils einen Absaugstutzen aufweisen, um mit einer Staubsaugvorrichtung (8) verbunden zu werden. Diese Verbindung ist weder in Fig. 1, noch in Fig. 2 dargestellt, ihr Vorhandensein ist aber im Sinne der Erfindung sehr bevorzugt. Ferner kann ein unterer Bereich der Abschlusskappen (7) als Niederhalter fungieren und die Abdeckschiene (1) auf den zu bearbeitenden Unterdruck (9) pressen. Dadurch wird die Staubdichtigkeit des geschlossenen Staubraums weiter erhöht und vorteilhafterweise vermieden, dass Staub aus dem Staubraum austreten und in die Atemwege eines Nutzers des Werkzeuggeräts (2) gelangen kann.

Das Werkzeuggerät (2) bzw. der Blattschutz des Werkzeugs (11) des Werkzeuggeräts (2) kann unter Verwendung eines Saugschlauchs mit einer Staubsaugvorrichtung (8) verbunden sein. Das Werkzeug (11) des Werkzeuggeräts (2) dringt durch einen Arbeitsspalt (10) in den im Wesentlichen geschlossenen Staubraum ein. Der Spalt (10) kann vorgefertigt in der Abdeckschiene (1) vorgesehen sein. Es kann im Sinne der Erfindung auch bevorzugt sein, dass der Spalt (10) erst durch das Werkzeuggerät (2) selbst in die Abdeckschiene (1) eingebracht wird. Bei einem vorgefertigten Spalt (10) können in dem Spalt (10) Bürsten (nicht dargestellt) vorgesehen sein, um eine Austrittsfläche für den Staub zu minimieren.

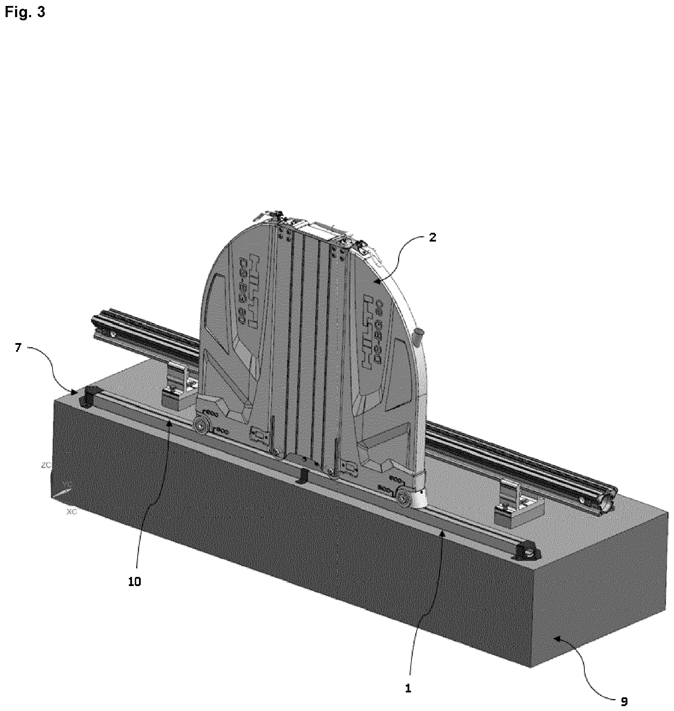

Figur 3 zeigt eine weitere schräge Seitenansicht einer bevorzugten Ausgestaltung der vorgeschlagenen Abdeckschiene (1). Insbesondere zeigt Fig. 3 den Untergrund (9), in den ein Schnittspalt (3, nicht dargestellt) eingebracht werden soll. Dazu wird das Werkzeuggerät (2) entlang einer Führungsschiene bewegt, so dass das Werkzeug (11, nicht dargestellt) des Werkzeuggeräts (2) in den zu bearbeitenden Untergrund (9) eindringen und den Schnittspalt (3) erzeugen kann. Es ist im Sinne der Erfindung insbesondere bevorzugt, dass das Werkzeug (11) des Werkzeuggeräts (2) durch den Spalt (10) der Vorrichtung (1) in den vorzugsweise geschlossenen Staubraum bzw. den zu bearbeitenden Untergrund (9) eindringt. In der in Fig. 3 dargestellten bevorzugten Ausführungsform der Erfindung liegen die Abschlusskappen (7) der Vorrichtung (1) an den Enden der Abdeckschiene (1) angeordnet vor.

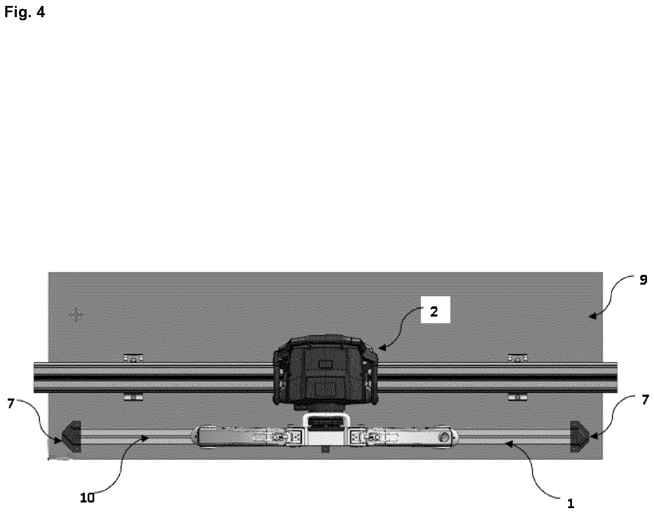

Fig. 4 zeigt eine Draufsicht auf eine bevorzugte Ausgestaltung der Vorrichtung (1). Dargestellt ist insbesondere das Werkzeuggerät (2), das sich entlang einer Führungsschiene über den zu bearbeitenden Untergrund (9) bewegen kann. Das Werkzeuggerät (2) ist dazu eingerichtet, das Werkzeug (11), das besonders bevorzugt eine Wandsäge sein kann, in eine Rotationsbewegung zu versetzen, um einen Untergrund (9) zu bearbeiten. In dem in Fig. 4 dargestellten Ausführungsbeispiel der Erfindung weist die Abdeckschiene (1) zwei Verschlusskappen (7) auf, die an dem vorderen Ende (6) und dem hinteren Ende (5) der Vorrichtung (1) angeordnet sind. Nicht dargestellt sind die Absaugstutzen, die jeweils an den Abschlusskappen (7) vorgesehen sein können, um eine Verbindung mit einer Staubsaugvorrichtung (8) herzustellen. Die Vorrichtung (1) weist einen Spalt (10) auf, in dem das Werkzeug (11) des Werkzeuggeräts (2) rotieren kann, um den Schnittspalt (3, nicht dargestellt) zum Durchtrenne des zu bearbeitenden Untergrunds (9) erzeugt werden kann.

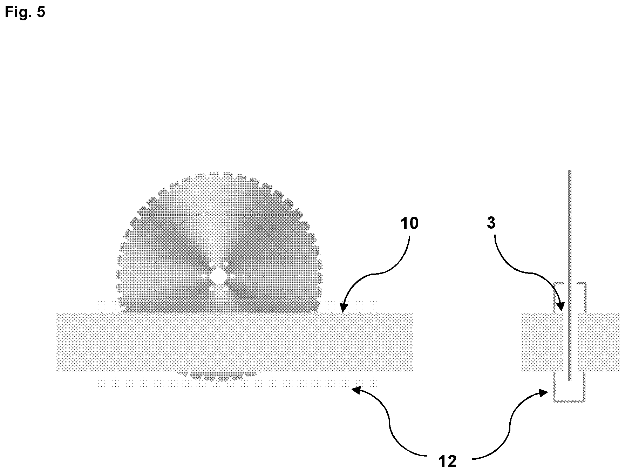

Fig. 5 zeigt ein bevorzugtes Ausführungsbeispiel der vorgeschlagenen Abdeckschiene (1) in der Seitenansicht. Insbesondere zeigt Fig. 5 eine rückseitige Abdeckung (12), die verwendet werden kann, um eine Unterseite oder eine Rückseite des zu bearbeitenden Untergrundes (9) abzudecken. Dies ist besonders vorteilhaft, wenn mit dem Werkzeuggerät (2), das beispielsweise eine Säge sein kann, ein Bauteil zugeschnitten werden soll, so dass das zu bearbeitende Objekt im Wesentlichen vollkommen durchtrennt wird. Bei der rückseitigen Abdeckung (12) kann es sich beispielsweise um ein U-Profil oder um eine Folie handeln.

### Bezugszeichenliste

- 1: Vorrichtung
- 2: Werkzeuggerät
- 3: Schnittspalt
- 4: Arbeitsbereich
- 5: erstes Ende der Vorrichtung
- 6: zweites Ende der Vorrichtung
- 7: Anschlussmittel
- 8: Staubsaugvorrichtung
- 9: Untergrund
- 10: Spalt
- 11: Werkzeugs des Werkzeuggeräts
- 12: rückseitige Abdeckung

## Patentansprüche

1. Vorrichtung (1) zum Abdecken eines mit einem Werkzeuggerät (2) erzeugbaren Schnittspalts (3), insbesondere bei einer Trockenanwendung,
**dadurch gekennzeichnet, dass**
die Vorrichtung (1) den Schnittspalt (3) in einem Arbeitsbereich (4) des Werkzeuggeräts (2) bedeckt, wobei die Vorrichtung (1) Mittel (7) zum Anschluss einer Vorrichtung (8) zur Staubsabsaugung aufweist.

2. Vorrichtung (1) nach Anspruch 1,
**dadurch gekennzeichnet, dass**
die Mittel (7) zum Anschluss an einem Ende (5 oder 6) oder an beiden Enden (5 und 6) der Vorrichtung (1) angeordnet vorliegen.

3. Vorrichtung (1) nach Anspruch 1 oder 2,
**dadurch gekennzeichnet, dass**
die Mittel (7) zum Anschluss dazu eingerichtet sind, die Vorrichtung (1) auf einen zu bearbeitenden Untergrund (9) zu drücken.

4. Vorrichtung (1) nach einem der vorhergehenden Ansprüche,
**dadurch gekennzeichnet, dass**
die Mittel (7) zum Anschluss dazu eingerichtet sind, den Schnittspalt (3) an den Enden (5 und/oder 6) nach außen abzudichten.

5. Vorrichtung (1) nach einem der vorhergehenden Ansprüche
**dadurch gekennzeichnet, dass**
die Vorrichtung (1) einen vorgefertigten Spalt (10) für eine Aufnahme eines Werkzeugs (11) des Werkzeuggeräts (2) während eines Arbeitsprozesses umfasst.

6. Vorrichtung (1) nach Anspruch 5
**dadurch gekennzeichnet, dass**
die Vorrichtung (1) Bürsten umfassen, die in den vorgefertigten Spalt (10) hineinragen.

7. Vorrichtung (1) nach Anspruch 5 oder 6
**dadurch gekennzeichnet, dass**
die Vorrichtung (1) teleskopartig ausgebildet ist.

8. Vorrichtung (1) nach einem der Ansprüche 1 bis 4
**dadurch gekennzeichnet, dass**
ein Spalt (10) für eine Aufnahme eines Werkzeugs (11) des Werkzeuggeräts (2) während eines Arbeitsprozesses in die Vorrichtung (1) einbringbar ist.

9. Vorrichtung (1) nach einem der vorhergehenden Ansprüche
**dadurch gekennzeichnet, dass**
die Vorrichtung (1) in Verbindung mit einer Führungsschiene für das Werkzeuggerät (2) verwendbar ist oder Bestandteil einer solchen Führungsschiene ist. Könnten wir hier von "Führungssystem" sprechen um auch die Schienenfüße mit einzubeziehen?

10. System aus mindestens zwei Vorrichtungen (1) nach einem der vorhergehenden Ansprüche
**dadurch gekennzeichnet, dass**
die mindestens zwei Vorrichtungen (1) ineinanderschiebbar ausgebildet sind.

11. Verfahren zum Absaugen von Staub aus einem Arbeitsbereich (4) eines Werkzeuggeräts (2)
**umfassend die folgenden Schritte:**
a) Bereitstellung einer Vorrichtung (1) nach einem der Ansprüche 1 bis 9 oder eines Systems nach Anspruch 10,
b) Abdeckung des Arbeitsbereiches (4) mit der Vorrichtung (1) oder einer Vorrichtung (1) des Systems,
c) Verbindung der Vorrichtung (1) oder einer Vorrichtung (1) des Systems mit einer Vorrichtung (8) zur Staubabsaugung,
d) Durchführung eines Arbeitsvorgangs mit dem Werkzeuggerät (2),
d) Absaugung des bei dem Arbeitsvorgang entstehenden Staubs mit der Vorrichtung (8) zur Staubabsaugung.
